# EUROPÄISCHE PATENTSCHRIFT

(11) **EP 3 368 867 B1**
(45) Veröffentlichungstag und Bekanntmachung des Hinweises auf die Patenterteilung: **21.04.2021**
(21) Anmeldenummer: 16763274.4
(22) Anmeldetag: 12.09.2016
(51) Int. Cl.: G01F 1/84, G01N 9/00, G01N 11/16

(54) **MEMS SENSOR ZU MESSUNG MINDESTENS EINER MESSGRÖSSE EINES FLUIDS**
MEMS SENSOR FOR MEASURING AT LEAST ONE MEASUREMENT VARIABLE OF A FLUID
CAPTEUR MEMS POUR LA MESURE D'AU MOINS UNE GRANDEUR MESURABLE D'UN FLUIDE

(30) Priorität: 27.10.2015 DE 102015118346
(43) Veröffentlichungstag der Anmeldung: 05.09.2018
(73) Patentinhaber: TrueDyne Sensors AG, 4153 Reinach (CH); Endress+Hauser Flowtec AG, 4153 Reinach (CH)
(72) Erfinder: REITH, Patrick, 4053 Basel (CH); HUBER, Christof, 3007 Bern (CH); FETH, Hagen, 79106 Freiburg (DE)
(74) Vertreter: Andres, Angelika Maria
(86) Internationale Anmeldenummer: PCT/EP2016/071397
(87) Internationale Veröffentlichungsnummer: WO 2017/071864

(56) Entgegenhaltungen:
- US-A- 5 731 527
- US-A1- 2006 037 187
- US-A1- 2010 037 706
- HOPCROFT M A ET AL: "What is the Young's Modulus of Silicon?", JOURNAL OF MICROELECTROMECHANICAL SYSTEMS, IEEE SERVICE CENTER, US, Bd. 19, Nr. 2, 1. April 2010 (2010-04-01), Seiten 229-238, XP011304787, ISSN: 1057-7157

## Beschreibung

Die Erfindung betrifft einen MEMS-Sensor zur Messung mindestens einer Messgröße, insb. einer Dichte, eines Durchflusses und/oder einer Viskosität, eines Fluids, mit mindestens einem mikrofluidischen Kanal, der mindestens einen zu Schwingungen anregbaren Kanalabschnitt aufweist, und einer Erregereinrichtung zur Anregung einer Nutzschwingungsmode, bei der der Kanalabschnitt Schwingungen in einer vorgegebenen Schwingungsebene ausführt.

MEMS-Sensoren sind Mikro-Elektromechanische Systeme, die in der Messtechnik zur messtechnischen Erfassung einer oder mehrerer Messgrößen eingesetzt werden. Diese MEMS-Sensoren werden regelmäßig unter Verwendung von in der Halbleitertechnologie üblichen Verfahren, wie z.B. Ätzprozessen, Oxidationsverfahren, Implantationsverfahren, Bondverfahren und/oder Beschichtungsverfahren, unter Verwendung von ein oder mehrlagigen Wafern, insb. Wafern auf Siliziumbasis, hergestellt.

MEMS-Sensoren zur Messung mindestens einer Messgröße, insb. einer Dichte, eines Durchflusses und/oder einer Viskosität, eines Fluids, mit einem mikrofluidischen Kanal, der einen zu Schwingungen anregbaren Kanalabschnitt aufweist, und einer Erregereinrichtung zur Anregung einer Nutzschwingungsmode, bei der der Kanalabschnitt Schwingungen in einer vorgegebenen Schwingungsebene ausführt, sind beispielsweise in der DE 10 2008 039 045 A1, der US 2010/0037706 A1 und der US 2002/0194908 A1 beschrieben.

MEMS-Sensoren der eingangs genannten Art können zur Ausführung unterschiedlicher Messprinzipien eingesetzt werden.

Ein Beispiel hierfür ist die Coriolis-Massendurchfluss-Messung, die darauf beruht, dass in einem vom Fluid durchströmten zu Schwingungen angeregten Kanalabschnitt Corioliskräfte entstehen, die sich auf die sich ausbildende Schwingungsform auswirken. Die resultierende Schwingungsform des Kanalabschnitts kann z.B. durch einen einlassseitig und einen auslassseitig am Kanalabschnitt angeordneten Schwingungssensor erfasst. In dem Fall weisen die von den beiden Schwingungssensoren erfassten Schwingungsbewegungen übereinstimmende, der resultierenden Schwingungsform entsprechende Frequenzen auf. Sie sind jedoch gegen einander um eine vom Massendurchfluss abhängige Phasenverschiebung phasenverschoben.

Ein weiteres Beispiel ist die Coriolis-Dichte-Messung. Auch hierfür wird mindestens ein im Messbetrieb von dem Fluid durchströmter Kanal eingesetzt, der mindestens einen mittels einer Erregereinrichtung zu Schwingungen anregbaren Kanalabschnitt umfasst. Bei diesem Messprinzip wird der Kanalabschnitt zu Schwingungen bei einer Resonanzfrequenz angeregt. Die Resonanzfrequenz ist abhängig von der Dichte des strömenden Fluids und kann somit zur Bestimmung der Dichte herangezogen werden.

Bei MEMS-Sensoren mit mindestens einem im Messbetrieb zu Schwingungen anregbaren Kanalabschnitt besteht das Problem, dass zu Schwingungen anregbare Kanalabschnitte unterschiedliche Schwingungsmoden ausführen können. Dabei besteht die Gefahr, dass sich der im Messbetrieb angeregten Nutzschwingungsmode andere nachfolgend als Störmoden bezeichnete Schwingungsmoden überlagern können. Diese Störmoden können z.B. durch Störquellen, wie z.B. Vibrationen am Einsatzort, angeregt werden und beeinträchtigen die Messgenauigkeit dieser Sensoren. Besonders kritisch sind insoweit Störmoden, die Eigenschwingungsmoden des Kanalabschnitts entsprechen, da diese unter vergleichsweise geringem Energieeinsatz angeregt werden können.

Dieses Problem tritt auch bei konventionellen Coriolis-Massendurchfluss-Messgeräten mit zu Schwingungen anregbaren Messrohren auf.

In Verbindung mit konventionellen Coriolis-Massendurchfluss-Messgeräten mit zu Schwingungen anregbaren Messrohren ist in der US 5,731,527 A1 beschrieben Störmoden zu unterdrücken, indem auf einander gegenüberliegende Außenseiten der Messrohre parallel zur Längsachse des Messrohrs verlaufende, längliche Streifen aus einem Faserverbundwerkstoff aufgebracht werden, die eine von der Position der Streifen und der Ausrichtung der Fasern abhängige Versteifung des jeweiligen Messrohrs bewirken.

Diese Lösung ist jedoch nicht ohne Weiteres auf MEMS-Sensoren übertragbar. Hierzu müssten Faserverbundwerkstoffe gefunden werden, die von außen auf mikrofluidische Kanäle von MEMS-Sensoren aufgebracht werden könnten. Darüber hinaus müsste ein Verfahren zur Aufbringung dieser Werkstoffe ermittelt werden, mit dem eine Verbindung von Faserverbundwerkstoff und Kanal hergestellt werden kann, die den durch die Schwingungen des Kanals verursachten mechanischen Belastungen auf Dauer stand halten kann.

Es ist eine Aufgabe der Erfindung einen MEMS-Sensor zur Messung mindestens einer Messgröße eines strömenden Fluids anzugeben, der die Nachteile des vorgenannten Standes der Technik überwindet.

Hierzu umfasst die Erfindung einen MEMS-Sensor zur Messung mindestens einer Messgröße, insb. einer Dichte, eines Durchflusses und/oder einer Viskosität, eines Fluids, nach Anspruch 1.

Eine erste Weiterbildung sieht vor, dass
- der Kanalabschnitt aus Silizium oder aus einem Werkstoff auf Siliziumbasis, insb. aus dotiertem Silizium, besteht, und
- eine Kristallstruktur des Werkstoffs derart ausgerichtet ist, dass
   -- die (110)-Richtung der Kristallstruktur parallel zu einer Längsachse des Kanalabschnitts verläuft, und
   -- die (001)- Richtung der Kristallstruktur parallel zu einer Flächennormale auf die Schwingungsebene verläuft.

Eine bevorzugte Ausgestaltung sieht vor, dass der Kanalabschnitt in senkrecht zur Schwingungsebene und senkrecht zu dessen Längsachse verlaufender Richtung eine Höhe aufweist, die größer als dessen senkrecht zur Höhe und senkrecht zu dessen Längsachse verlaufende Breite ist.

Eine erste Variante sieht vor, dass
- zwei parallel zueinander angeordnete, auf zwei voneinander beabstandeten Stützkörpern angeordnete Kanäle vorgesehen sind ,
   -- die jeweils einen zwischen den beiden Stützkörpern frei liegenden Kanalabschnitt umfassen,
   -- die beiden Kanalabschnitte parallel zueinander verlaufen, und
- die Erregereinrichtung derart ausgebildet ist, dass sie die beiden Kanalabschnitte im Messbetrieb jeweils zu Schwingungen, insb. zu gegenphasigen Schwingungen, in der vorgegebenen Schwingungsebene anregt.

Eine zweite Variante sieht vor, dass
- der Kanal ein auf zwei voneinander beabstandeten Stützkörpern angeordneter u-förmiger Kanal ist,
   -- der zwei parallel zueinander angeordnete voneinander beabstandete Kanalsegmente und ein die beiden parallelen Kanalsegmente miteinander verbindendes Kanalsegment umfasst, und
   -- dessen Kanalabschnitte jeweils durch einen zwischen den beiden Stützkörpern frei liegenden Kanalabschnitt eines der beiden parallelen Kanalsegmente gebildet sind, und
- die Erregereinrichtung derart ausgebildet ist, dass sie die beiden Kanalabschnitte im Messbetrieb jeweils zu Schwingungen, insb. zu gegenphasigen Schwingungen, in der vorgegebenen Schwingungsebene anregt.

Eine weitere Ausgestaltung sieht vor, dass
- der Kanal einen Einlass aufweist, über den das Fluid im Messbetrieb einlassseitig in den Kanal eintritt, und
- der Kanal einen Auslass aufweist, über den das Fluid im Messbetrieb nach dem durchströmen des Kanals auslassseitig aus dem Kanal austritt.

Eine weitere Ausgestaltung sieht vor, dass
- die Erregereinrichtung derart ausgestaltet ist, dass sie im Messbetrieb die Nutzschwingungsmode anregt, und
- eine Messeinrichtung vorgesehen ist, die derart ausgebildet ist, dass sie im Messbetrieb mindestens eine von einer Eigenschaft, insb. einem Massendurchfluss, einer Dichte oder einer Viskosität, des im Messbetrieb durch den Kanal hindurch strömenden Fluids abhängige Eigenschaft der resultierenden Schwingungsform des Kanalabschnitts messtechnisch erfasst und hieraus die zugehörige Messgröße bestimmt.

Weiter umfasst die Erfindung ein Verfahren zur Herstellung erfindungsgemäßer MEMS-Sensoren, dass sich dadurch auszeichnet, dass
- aus einem ersten Wafer aus dem anisotropen Werkstoff im Querschnitt u-förmige, jeweils drei der vier Kanalwände eines Kanals bildende Profile hergestellt werden, die in der Draufsicht den Verlauf der herzustellenden Kanäle aufweisen, und
- ein zweiter Wafer derart mit dem ersten Wafer verbunden wird, dass er die Innenräum der u-förmigen Profile nach außen abschließt, und
- der zweite Wafer bis auf dessen die vierten Kanalwände bildenden Bereiche entfernt wird,
- wobei der erste und der zweite Wafer den anisotropen Werkstoff jeweils in einer räumlichen Ausrichtung enthalten, die der Ausrichtung des Werkstoffs in den Kanalabschnitten entspricht.

Eine Weiterbildung diese Verfahrens zeichnet sich dadurch aus, dass
- die Wafer aus Silizium oder aus einem Werkstoff auf Siliziumbasis, insb. aus dotiertem Silizium, bestehen,
- eine Flächenormale auf den ersten und den zweiten Wafer jeweils parallel zur (100)-Richtung der Kristallstruktur des Werkstoffs verläuft, und
- die Wafer bei der Herstellung der Kanäle derart ausgerichtet werden, dass die Längsachsen der Kanalabschnitte parallel zur (110)-Richtung der Kristallstruktur verlaufen.

Erfindungsgemäße MEMS-Sensoren weisen den Vorteil auf, dass über die Ausrichtung des Werkstoffs eine Störmoden unterdrückende Erhöhung der Steifigkeit des Kanalabschnitts gegenüber senkrecht zur Schwingungsebene x-y verlaufenden Auslenkungen und/oder eine die Messempfindlichkeit steigernde Erniedrigung der Steifigkeit des Kanalabschnitts gegenüber parallel zur Schwingungsebene verlaufenden Auslenkungen bewirkt wird.

Die Erfindung und weitere Vorteile werden nun anhand der Figuren der Zeichnung, in denen drei Ausführungsbeispiele dargestellt sind, näher erläutert; gleiche Teile sind in den Figuren mit gleichen Bezugszeichen versehen.
- Fig. 1 zeigt:: eine Draufsicht auf einen MEMS-Sensor mit einem Kanal;
- Fig. 2 zeigt:: eine Schnittzeichnung des MEMS-Sensors von Fig. 1;
- Fig. 3 zeigt:: einen Querschnitt eines Kanalabschnitts von Fig. 1;
- Fig. 4 zeigt:: einen alternativen Querschnitt eines Kanalabschnitts von Fig.1;
- Fig. 5 zeigt:: eine Draufsicht auf einen MEMS-Sensor mit zwei Kanälen;
- Fig. 6 zeigt:: eine Draufsicht auf einen MEMS-Sensor mit einem u-förmigen Kanal;
- Fig. 7 zeigt:: eine Schnittzeichnung des MEMS-Sensors von Fig. 6;
- Fig. 8 zeigt:: eine Schnittzeichnung eines (001)-Silizium Wafers in der die Ausrichtung eines Kanalabschnitts von Fig. 1, 5 oder 6 relativ zur Ausrichtung der Kristallstruktur des Wafers schematisch dargestellt ist; und
- Fig. 9 zeigt:: eine Draufsicht auf den Wafer von Fig. 8.

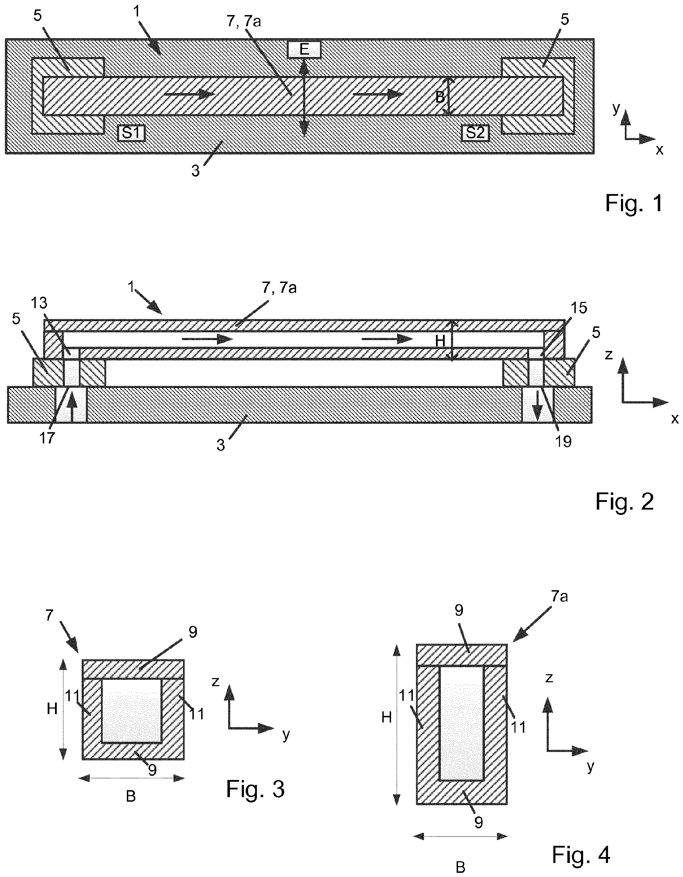

Fig. 1 zeigt eine Draufsicht auf ein erstes Ausführungsbeispiel eines erfindungsgemäßen MEMS-Sensors zur Messung mindestens einer Messgröße eines strömenden Fluids, insb. einer Flüssigkeit oder eines Gases. Fig. 2 zeigt eine Schnittzeichnung des MEMS-Sensors von Fig. 1. Der MEMS-Sensor umfasst einen mikrofluidischen Kanal 1, der auf zwei auf einem Träger 3 angeordneten Stützkörpern 5 angeordnet ist. Der Kanal 1 umfasst einen zwischen den beiden Stützkörpern 5 frei liegenden Kanalabschnitt 7, der mittels einer hier nur schematisch dargestellten Erregereinrichtung E zu Schwingungen anregbar ist. Fig. 3 zeigt einen Querschnitt des Kanalabschnitts 7 von Fig. 1.

Zur Schwingungsanregung können z.B. elektrostatische, piezoelektrische oder magnetische Erregereinrichtungen E eingesetzt werden. Entsprechende Erregereinrichtungen sind dem Fachmann bekannt und daher hier nicht im Detail beschrieben. Die Erregereinrichtung E ist derart ausgestaltet, dass sie eine Nutzschwingungsmode anregt, bei der der Kanalabschnitt 7 Schwingungen in einer vorgegebenen, hier durch die Raumrichtungen x und y angezeigten Schwingungsebene x-y ausführt.

Die Nutzschwingungsmode entspricht vorzugsweise einer Eigenschwingungsmode des Kanalabschnitts 7. In dem Fall ist die Erregereinrichtung E ist in dem dargestellten Ausführungsbeispiel vorzugsweise derart ausgebildet, dass sie eine Auslenkung des Kanalabschnitts 7 zu beiden Seiten von dessen hier parallel zur Raumrichtung x verlaufenden Längsachse bewirkt, wobei die größten Auslenkungsamplituden vorzugsweise im Bereich der Mitte des Kanalabschnitts 7 auftreten und ausgehend von der Mitte des Kanalabschnitts 7 in Richtung der beiden fixierten Enden des Kanalabschnitts 7 abnehmen. Diese Nutzschwingungsmode ist in Fig. 1 durch einen senkrecht zur Längsachse des Kanals 1 verlaufenden Doppelpfeil angezeigt. Dabei weist der Kanalabschnitt 7 vorzugsweise zwei einander gegenüberliegende parallel zur Schwingungsebene x-y verlaufende Kanalwände 9 und zwei einander gegenüberliegende senkrecht zur Schwingungsebene x-y verlaufende Kanalwände 11 auf. Bei dieser Ausrichtung der Kanalwände 9, 11 weist der Kanalabschnitt 7 aufgrund seiner Formgebung neben der hier als Nutzschwingungsmode eingesetzten Eigenschwingungsmode eine weitere Eigenschwingungsmode auf, bei der der Kanalabschnitt 7 im Wesentlichen formgleiche Schwingungen in einer senkrecht zur Schwingungsebene x-y der Nutzschwingungsmode verlaufenden, hier durch die Raumrichtungen x und z aufgespannten Schwingungsebene x-z ausführt.

Der in Fig. 3 im Querschnitt dargestellte Kanalabschnitt 7 weist z.B. eine im Querschnitt quadratische Grundform auf, bei der dessen senkrecht zur Längsachse des Kanalabschnitts 7 und senkrecht zur Schwingungsebene x-y verlaufende Höhe H gleich dessen senkrecht zur Höhe H und zur Längsachse des Kanalabschnitts 7 verlaufenden Breite B ist.

Der Kanal 1 weist vorzugsweise eine Breite B von mindestens einem, vorzugsweise von mehreren 100 µm und eine Höhe H von mindestens einem, vorzugsweise von mehreren 100 µm auf. Die Kanalwände 9, 11 weisen beispielsweise eine Wandstärke in der Größenordnung von 10 µm bis 100 µm auf. Vorzugsweise liegt die Wandstärke im Bereich von 20 µm bis 60 µm.

Bei dem hier dargestellten Ausführungsbeispiel sind die gegenüberliegenden Enden des Kanals 1 auf dem jeweiligen Stützkörper 5 fixiert. Alternativ können natürlich auch andere Formen der Anordnung und/oder Befestigung des Kanals 1 und/oder des Kanalabschnitts 7 vorgesehen werden, die derart ausgestaltet sind, dass eine Nutzschwingungsmode angeregt werden kann, bei der der Kanalabschnitt 7 Schwingungen in einer vorgegebenen Schwingungsebene ausführt.

Der Kanal 1 umfasst einen Einlass 13, über den Fluid in den Kanal 1 eintreten kann, und einen Auslass 15, über den das Fluid aus dem Kanal 1 austreten kann. In dem dargestellten Ausführungsbeispiel wird der Einlass 13 über eine durch den Träger 3 und einen der beiden Stützkörper 5 geführte Zuleitung 17 gespeist. Das auslassseitig aus dem Kanal 1 austretende Fluid wird über eine durch den Träger 3 und den anderen Stützkörper 5 führende Ableitung 19 abgeführt. Dabei durchströmt das Fluid den Kanal 1 in der in Fig. 1 und Fig. 2 durch Pfeile angezeigten Strömungsrichtung.

Wird der vom Fluid durchströmte Kanalabschnitt 7 im Messbetrieb mittels der Erregereinrichtung E zu Schwingungen der Nutzschwingungsmode angeregt, so entstehen in dem vom Fluid durchströmten zu Schwingungen angeregten Kanalabschnitt 7 Corioliskräfte, die sich auf die resultierende Schwingungsform des Kanalabschnitts 7 auswirken.

Der MEMS-Sensor umfasst eine Messeinrichtung, die derart ausgestaltet ist, dass sie im Messbetrieb mindestens eine von einer zu messenden Messgröße abhängige Eigenschaft der resultierende Schwingungsform des Kanalabschnitts 7 messtechnisch erfasst und hieraus die jeweilige Messgröße bestimmt. Zur Messung einer oder mehrerer Messgrößen des strömenden Fluids können unterschiedliche aus dem Stand der Technik bekannte Messeinrichtungen zur Ausführung entsprechender Messverfahren, wie z.B. der eingangs genannten Coriolis-Massendurchfluss-Messung und/oder der eingangs genannten Coriolis-Dichte-Messung, eingesetzt werden. Die hier nur als ein mögliches Beispiel dargestellte Messeinrichtung umfasst zwei Schwingungssensoren S1, S2, von denen einer einlassseitig und einer auslassseitig am Kanalabschnitt 7 angeordnet ist. Bei dieser Ausgestaltung weisen die von den beiden Schwingungssensoren S1, S2 erfassten Schwingungen übereinstimmende, der resultierenden Schwingungsform entsprechende Frequenzen auf, die gegen einander um eine vom Massendurchfluss abhängige Phasenverschiebung phasenverschoben sind. Hierzu verwendbare Schwingungssensoren, z.B. kapazitive, piezoelektrische oder magnetische Schwingungssensoren, sind aus dem Stand der Technik bekannt und daher hier nicht im Detail beschrieben.

Der MEMS-Sensor kann z.B. zur Massendurchfluss-Messung eingesetzt werden, indem die vom Massendurchfluss abhängige Phasenverschiebung mittels einer hier nicht dargestellten an die Schwingungssensoren S1, S2 angeschlossenen Messschaltung bestimmt und hieraus der Massendurchflusses abgeleitet wird. Alternativ oder zusätzlich hierzu kann der MEMS-Sensor zur Coriolis-Dichte-Messung eingesetzt werden. In dem Fall wird der Kanalabschnitt 7 mittels der Erregereinrichtung E zu Schwingungen bei einer Resonanzfrequenz angeregt, die von der Dichte abhängige Resonanzfrequenz mittels einer hier nicht dargestellten, an die Schwingungssensoren S1, S2 angeschlossenen Messschaltung ermittelt und hieraus die Dichte des Fluids bestimmt.

Ist ein Druckabfall entlang des Kanals 1 bekannt, kann der MEMS-Sensor alternativ oder zusätzlich zur Messung einer Viskosität des Fluids eingesetzt werden. Der Druckabfall entspricht einer Differenz zwischen einem einlassseitig und einem auslassseitig im Kanal 1 wirkenden Druck. Der Druckabfall kann z.B. mittels eines dem Kanal 1 vorgeschalteten und eines dem Kanal 1 nachgeschalteten hier nicht dargestellten Drucksensors messtechnisch erfasst werden. Entsprechende Drucksensoren sind zum Beispiel in der US 2002/0194908 A1 beschrieben. Der Druckabfall ist gemäß dem Gesetz von Hagen-Poiseuille abhängig vom Produkt des Massendurchflusses durch den Kanal 1 und der kinematischer Viskosität des durch den Kanal 1 hindurch strömenden Fluids. Entsprechend kann bei bekanntem Druckabfall anhand des mit dem MEMS-Sensor gemessenen Massendurchflusses die kinematische Viskosität des Fluids bestimmt werden.

Alternativ kann die Viskosität aber auch anhand einer von der Viskosität abhängigen Schwingungsdämpfung bestimmt werden. Ein hierzu verwendbares Messverfahren ist z.B. in der EP 01158289 B1 beschrieben.

Erfindungsgemäß besteht der Kanalabschnitt 7 aus einem anisotropen Werkstoff mit richtungsabhängiger Elastizität, der räumlich derart ausgerichtet ist, dass ein für eine Steifigkeit des Kanalabschnitts 7 gegenüber senkrecht zur Schwingungsebene x-y verlaufenden Auslenkungen des Kanalabschnitts 7 maßgebliches Elastizitätsmodul des Werkstoffs größer als ein für eine Steifigkeit des Kanalabschnitts 7 gegenüber in der Schwingungsebene x-y verlaufenden Auslenkungen des Kanalabschnitts 7 maßgebliches Elastizitätsmodul ist. Dabei wird die Ausrichtung des Werkstoffs gezielt dazu eingesetzt, die Steifigkeit des Kanalabschnitts 7 gegenüber senkrecht zur Schwingungsebene x-y verlaufenden Auslenkungen zu erhöhen und/oder gegenüber parallel zur Schwingungsebene x-y verlaufenden Auslenkungen zu erniedrigen.

Die erfindungsgemäße Ausrichtung des Werkstoffs des Kanalabschnitts 7 bietet den Vorteil, dass sie einen Frequenzabstand zwischen den Eigenfrequenzen der als Nutzschwingungsmode genutzten Eigenschwingung des Kanalabschnitts 7 und der in der senkrecht zur Schwingungsebene x-y der Nutzschwingungsmode verlaufenden Schwingungsebene x-z verlaufenden weiteren Eigenschwingungsmode bewirkt. Während diese beiden Eigenfrequenzen bei einem im Querschnitt quadratischen Kanalabschnitt aus einem isotropen Werkstoff identisch wären, besteht bei einem formgleichen Kanalabschnitt 7 mit erfindungsgemäßer Ausrichtung des anisotropen Werkstoffs ein Frequenzabstand, wobei die Eigenfrequenz der Nutzschwingungsmode geringer als die der senkrecht dazu verlaufenden, ansonsten aber formgleichen, weiteren Eigenschwingungsmode ist.

Eine geringere Steifigkeit des Kanalabschnitts 7 gegenüber in der Schwingungsebene x-y verlaufenden Auslenkungen bietet die Vorteile, dass sich hierdurch die Eigenfrequenz der Nutzschwingungsmode erniedrigt, und dass der MEMS-Sensor eine höhere Messempfindlichkeit aufweist.

Letzteres ist insb. deshalb der Fall, da die im Messbetrieb entstehenden Coriolis-Kräfte bei geringerer Steifigkeit des Kanalabschnitts 7 gegenüber in der Schwingungsebene x-y verlaufenden Auslenkungen eine stärkeren Einfluss auf die resultierende Schwingungsform haben.

Diese Vorteile sind umso ausgeprägter, je größer die über die Ausrichtung des Werkstoffs bewirkte Reduzierung der Steifigkeit des Kanalabschnitts 7 gegenüber in der Schwingungsebene x-y verlaufenden Auslenkungen ist.

Genauso wie über eine Erniedrigung der Steifigkeit des Kanalabschnitts 7 gegenüber in der Schwingungsebene x-y der Nutzschwingungsmode verlaufenden Schwingungen kann natürlich auch über eine Erhöhung der Steifigkeit des Kanalabschnitts 7 gegenüber senkrecht zur Schwingungsebene x-y der Nutzschwingungsmode verlaufenden Schwingungen ein Frequenzabstand zwischen den beiden Eigenfrequenzen erzielt werden. Ein solcher Frequenzabstand ist im Hinblick auf die Unterdrückung von Störmoden mit senkrecht zur Schwingungsebene x-y der Nutzschwingungsmode verlaufenden Schwingungsanteilen von Vorteil. Je größer der Frequenzabstand ist, umso geringer ist die Gefahr, dass Störmoden angeregt werden. Darüber hinaus können Einflüsse von Störmoden aufgrund der unterschiedlichen Eigenfrequenzen leichter erkannt und bei der Ableitung der Messsignale herausgefiltert werden.

Als anisotroper Werkstoff mit richtungsabhängiger Elastizität eignet sich insb. ein kristalliner Werkstoff mit einer von dessen Kristallstruktur abhängigen richtungsabhängigen Elastizität, wie z.B. Silizium oder Werkstoffe auf Siliziumbasis, wie z.B. dotiertes Silizium. Die Richtungsabhängigkeit der Elastizität kann beispielsweise durch Messungen der Elastizitätsmodule des Werkstoffs in unterschiedlichen jeweils auf die Ausrichtung der Kristallstruktur bezogenen Raumrichtungen quantitativ erfasst werden. Dabei wird die Ausrichtung der Kristallstruktur vorzugsweise durch die entsprechenden Miller-Indizes angegeben.

Besteht der Kanalabschnitt 7 aus Silizium oder einem Werkstoff auf Siliziumbasis, so weist dessen Kristallstruktur vorzugsweise eine Ausrichtung auf, bei der die [110]-Richtung der Kristallstruktur parallel zur Längsachse des Kanalabschnitts 7 verläuft und die [001]-Richtung der Kristallstruktur senkrecht Schwingungsebene x-y verläuft. Bei dieser Ausrichtung des Werkstoffs ist das in [110]-Richtung der Kristallstruktur wirkende Elastizitätsmodul von Silizium maßgeblich für die Steifigkeit des Kanalabschnitts 7 gegenüber senkrecht zur Schwingungsebene x-y verlaufenden Auslenkungen. Diese Elastizitätsmodul liegt in der Größenordnung von 169 GPa. Dem gegenüber wird die Steifigkeit des Kanalabschnitts 7 gegenüber parallel zur Schwingungsebene x-y verlaufenden Auslenkungen maßgeblich durch das deutlich niedrigere in [100]-Richtung der Kristallstruktur wirkende Elastizitätsmodul bestimmt, das in der Größenordnung von 130 GPa liegt.

Zusätzlich zu den durch die erfindungsgemäße Ausrichtung des Werkstoffs des Kanalabschnitts 7 bewirkten Verbesserungen können die Schwingungseigenschaften des Kanalabschnitts 7 über die Formgebung des Kanalabschnitts 7 noch weiter verbessert werden. Eine besonders bevorzugte Formgebung besteht darin, den Kanalabschnitt 7a derart auszugestalten, dass dessen senkrecht zur Schwingungsebene x-y verlaufende Höhe H größer als dessen parallel zur Schwingungsebene x-y und senkrecht zu dessen Längsachse verlaufende Breite B ist. Fig. 4 zeigt einen Querschnitt eines solchen Kanalabschnitts 7a. Dabei kann der Kanalabschnitt 7a zum Beispiel bei einer parallel zur Schwingungsebene x-y ausgerichteten Breite B in der Größenordnung von 150 µm eine senkrecht zur Schwingungsebene x-y verlaufende Höhe H in der Größenordnung von 300 µm aufweisen. Durch diese Formgebung wird eine zusätzliche Vergrößerung des Verhältnisses der Steifigkeit des Kanalabschnitts 7a bezüglich senkrecht zur Schwingungsebene x-y der Nutzschwingungsmode verlaufenden Auslenkungen in Relation zur Steifigkeit des Kanalabschnitts 7a bezüglich in dieser Schwingungsebene x-y verlaufenden Auslenkungen, sowie des damit einhergehenden Frequenzabstands zwischen den beiden zugehörigen Eigenfrequenzen bewirkt.

Die zuvor am Beispiel eines einen einzigen Kanal 1 mit einem einzigen zu Schwingungen anregbaren Kanalabschnitt 7, 7a erläuterte Erfindung ist völlig analog auch bei anderen MEMS-Sensoren einsetzbar, die mindestens einen mikrofluidischen Kanal aufweisen, der mindestens einen Kanalabschnitt aufweist, der mittels einer Erregereinrichtung zur Anregung einer Nutzschwingungsmode zu Schwingungen in einer vorgegebenen Schwingungsebene anregbar ist. Beispiele hierfür sind MEMS-Sensoren, die zwei oder mehr Kanäle, insb. strömungstechnisch parallel oder in Serie zueinander geschaltete Kanäle, aufweisen, von denen mindestens einer mindestens einen auf die oben in Verbindung mit dem Kanalabschnitt 7, 7a beschriebene Weise ausgebildeten Kanalabschnitt aufweist. Die Erfindung ist nicht auf MEMS-Sensoren mit einem oder mehreren geraden Kanälen beschränkt, sondern kann anlog auch in Verbindung mit Kanälen mit nicht geradlinigem Verlauf eingesetzt werden. Beispiele hierfür sind Kanäle mit u-förmigem, v-förmigem oder Ω-förmigem Verlauf.

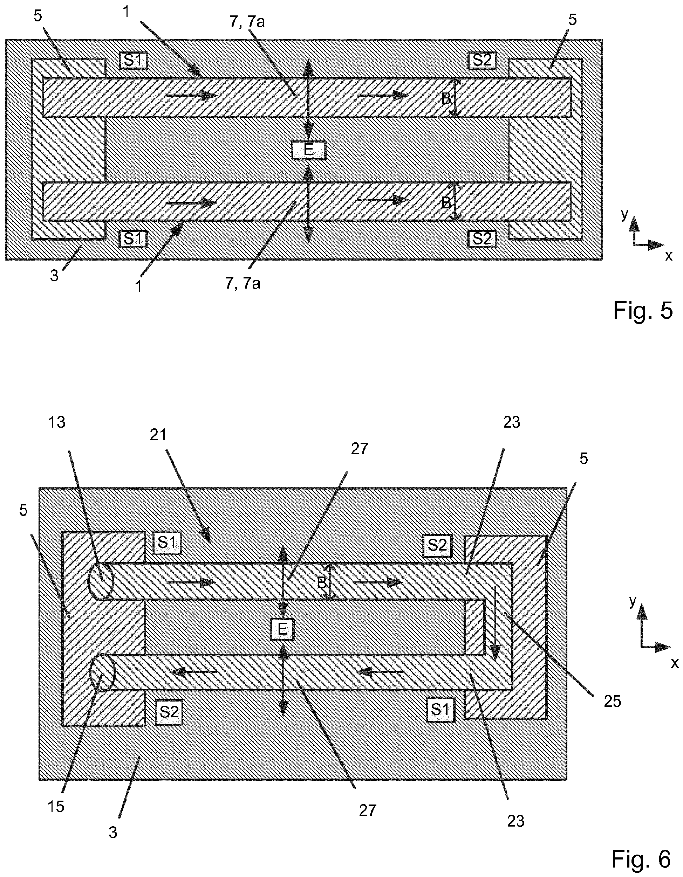

Fig. 5 zeigt hierzu ein Ausführungsbeispiel, dass sich von dem anhand von Fig. 1 bis 4 beschriebenen Ausführungsbeispiel lediglich dadurch unterscheidet, dass zwei parallel zueinander angeordnete, parallel zueinander vom Fluid durchströmte Kanäle 1 vorgesehen sind, die jeweils einen zu Schwingungen in der vorgegebenen Schwingungsebene x-y anregbaren Kanalabschnitt 7, 7a aufweisen. Die Kanäle 1 und deren Kanalabschnitte 7, 7a sind identisch zu den in Fig. 1 dargestellten, so dass insoweit auf die obigen Ausfürhrungen verwiesen wird. Die Nutzschwingungsmoden entsprechen der anhand des vorherigen Ausführungsbeispiels beschriebenen Nutzschwingungsmode, wobei die Anregung der beiden hier parallel zueinander verlaufenden Kanalabschnitte 7, 7a vorzugsweise gegenphasig erfolgt.

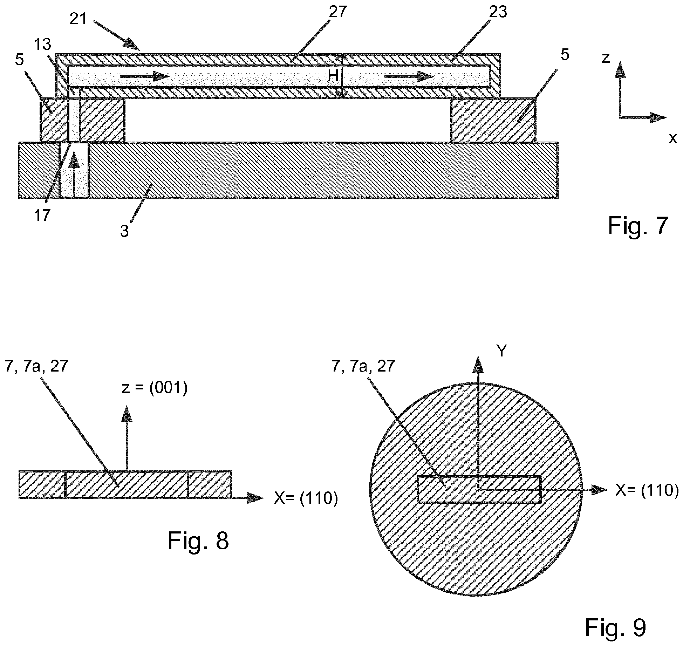

Fig. 6 zeigt eine Draufsicht auf ein Ausführungsbeispiel eines erfindungsgemäßen MEMS-Sensors mit einem u-förmigen Kanal 21. Fig. 7 zeigt eine Schnittzeichnung des MEMS-Sensors von Fig. 6. Der u-förmige Kanal 21 umfasst zwei parallel zueinander angeordnete, voneinander beabstandete Kanalsegmente 23 und ein die beiden parallelen Kanalsegmente 23 miteinander verbindendes Kanalsegment 25. Der Kanal 21 ist auf zwei auf einem Träger 3 angeordneten Stützkörpern 5 angeordnet. Der erste Stützkörper 5 trägt die den Einlass 13 bzw. den Auslass 15 umfassenden, unverbundenen Enden der beiden parallelen Kanalsegmente 23. Der zweite Stützkörper 5 ist in Längsrichtung der parallelen Kanalsegmente 23 vom ersten Stützkörper 5 beabstandet und trägt einen dem die beiden parallelen Kanalsegmente 23 miteinander verbindenden Kanalsegment 25 zugewandten Bereich der beiden parallelen Kanalsegmente 23. In dem dargestellten Ausführungsbeispiel wird der Einlass 13 über eine durch den Träger 3 und den ersten Stützkörper 5 geführte Zuleitung 17 gespeist und das auslassseitig aus dem Kanal 21 austretende Fluid über eine durch den Träger 3 und den ersten Stützkörper 5 führende Ableitung 19 abgeführt. Dabei durchströmt das Fluid den Kanal 1 in der in Fig. 6 und Fig. 7 durch Pfeile angezeigten Strömungsrichtung.

Jedes der beiden parallel verlaufenden Kanalsegmente 23 umfasst jeweils einen zwischen den beiden Stützkörpern 5 frei liegenden Kanalabschnitt 27 der mittels einer hier nur schematisch dargestellten Erregereinrichtung E in Schwingungen in einer durch die in Fig. 6 durch die Koordinaten x und y angezeigten Schwingungsebene x-y versetzt werden kann. Die Schwingungsebene x-y entspricht der durch die beiden parallelen Kanalsegmente 23 aufgespannten Ebene. Die Erregereinrichtung E ist vorzugsweise derart ausgebildet, dass sie die beiden Kanalabschnitte 27 jeweils in, vorzugsweise gegenphasige, in Fig. 6 durch Doppelpfeile dargestellte Schwingungen in der Schwingungsebene x-y versetzt, bei denen die Kanalabschnitte 27 senkrecht zu deren Längsachse ausgelenkt werden.

Bei diesem Ausführungsbeispiel sind die Kanalsegmente 23 einschließlich deren zu Schwingungen anregbaren Kanalabschnitte 27 vorzugsweise beide auf die oben für den Kanal 1 und dessen Kanalabschnitt 7, 7a anhand der Figuren 1 bis 4 beschriebenen Weise ausgebildet, so dass insoweit auf die obigen Ausführungen verwiesen wird.

Bei der Herstellung erfindungsgemäßer MEMS-Sensoren wird vorzugsweise derart verfahren, dass aus einem ersten Wafer aus dem anisotropen Werkstoff im Querschnitt u-förmige Profile hergestellt werden, die in der Draufsicht den der gewünschten Kanalform der herzustellenden Kanäle 1, 21 entsprechenden Verlauf, z.B. den in Fig. 1 und 5 dargestellten geraden Verlauf der Kanäle 1 oder den in Fig. 6 dargestellten u-förmigen Verlauf des Kanals 21 aufweisen. Zur Herstellung der u-Profile werden vorzugsweise anisotrope Ätzverfahren, wie z.B. das Reaktive Ionentiefenätzen (DRIE), eingesetzt.

Wie aus Fig. 3 und 4 ersichtlich bildet jedes u-förmige Profil drei der vier Kanalwände 9, 11 des jeweiligen Kanals 1, 21. Zur Herstellung der nicht durch das u-förmige Profil bereit gestellten vierten Kanalwände 9 der Kanäle 1, 21 wird ein zweiter Wafer derart mit dem ersten Wafer verbunden, dass er die Innenraum der u-förmigen Profils nach außen abschließt. Diese Verbindung kann z.B. durch ein Bondverfahren, z.B. durch Silizium-Direkt-Bonden, hergestellt werden. Abschließend wird der zweite Wafer bis auf dessen die vierten Kanalwände 9 bildenden Bereiche entfernt. Auch hierfür wird vorzugsweise ein anisotropes Ätzverfahren, wie z.B. das Reaktive Ionentiefenätzen (DRIE), eingesetzt.

Beide Wafer enthalten den Werkstoff in einer räumlichen Ausrichtung, die der Ausrichtung des Werkstoffs in dem Kanalabschnitt 7, 7a bzw. in den Kanalabschnitten 27 entspricht.

Zur Herstellung der Kanäle 1, 21 der in den Figuren 1, 5 und 6 dargestellten MEMS-Sensoren können z.B. zwei Silizium-Wafer verwendet werden, die Silizium in einer räumlichen Ausrichtung enthalten, bei der die Flächennormale auf den jeweiligen Wafer parallel zur (001)-Richtung der Kristallstruktur verläuft. Diese Wafer werden zur Herstellung der Kanäle 1 bzw. 21 derart ausgerichtet, dass die Längsachsen der Kanalabschnitte 7, 7a bzw. die Längsachsen der beiden Kanalabschnitte 27 parallel zur (110) Richtung des Silizium-Wafers verlaufen. Fig. 8 zeigt hierzu eine Schnittzeichnung eines (001)-Silizium Wafers und Fig. 9 eine Draufsicht auf diesen Wafer, in der jeweils die Ausrichtung eines Kanalabschnitts 7, 7a bzw. 27 in dem in Fig. 1, 5 bzw. 6 verwendeten Koordinatensystem relativ zur Ausrichtung der Kristallstruktur schematisch dargestellt ist.

Die beschriebenen Herstellungsverfahren werden vorzugsweise im Waferverbund ausgeführt, wobei aus den entsprechend ausgerichteten beiden Wafern jeweils mehrere Kanäle 1, 21 gleichzeitig hergestellt werden.
- 1: Kanal
- 3: Träger
- 5: Stützkörper
- 7: Kanalabschnitt
- 9: Kanalwand parallel zur Schwingungsebene
- 11: Kanalwand senkrecht zur Schwingungsebene
- 13: Einlass
- 15: Auslass
- 17: Zuleitung
- 19: Ableitung
- 21: Kanal
- 23: Kanalsegment
- 25: Kanalsegment
- 27: Kanalabschnitt

## Patentansprüche

1. MEMS-Sensor zur Messung mindestens einer Messgröße, insb. einer Dichte, eines Durchflusses und/oder einer Viskosität, eines Fluids, mit
- mindestens einem mikrofluidischen Kanal (1, 21),
-- der mindestens einen zu Schwingungen anregbaren Kanalabschnitt (7, 7a, 27) aufweist, und
- einer Erregereinrichtung (E) zur Anregung einer Nutzschwingungsmode, bei der der Kanalabschnitt (7, 7a, 27) Schwingungen in einer vorgegebenen Schwingungsebene (x-y) ausführt,
**dadurch gekennzeichnet, dass**
der Kanalabschnitt (7, 7a, 27) aus einem anisotropen Werkstoff mit richtungsabhängiger Elastizität besteht, der räumlich derart ausgerichtet ist, dass ein für eine Steifigkeit des Kanalabschnitts (7, 7a, 27) gegenüber senkrecht zur Schwingungsebene (x-y) verlaufenden Auslenkungen des Kanalabschnitts (7, 7a, 27) maßgebliches Elastizitätsmodul des Werkstoffs größer als ein für eine Steifigkeit des Kanalabschnitts (7, 7a, 27) gegenüber in der Schwingungsebene (x-y) verlaufenden Auslenkungen des Kanalabschnitts (7, 7a, 27) maßgebliches Elastizitätsmodul ist.

2. MEMS-Sensor gemäß Anspruch 1, **dadurch gekennzeichnet, dass**
- der Kanalabschnitt (7, 7a, 27) aus Silizium oder aus einem Werkstoff auf Siliziumbasis, insb. aus dotiertem Silizium, besteht, und
- eine Kristallstruktur des Werkstoffs derart ausgerichtet ist, dass
-- die [110]-Richtung der Kristallstruktur parallel zu einer Längsachse des Kanalabschnitts (7, 7a, 27) verläuft, und
-- die [001]- Richtung der Kristallstruktur parallel zu einer Flächennormale auf die Schwingungsebene (x-y) verläuft.

3. MEMS-Sensor gemäß Anspruch 1, **dadurch gekennzeichnet, dass**
der Kanalabschnitt (7a, 27) in senkrecht zur Schwingungsebene (x-y) und senkrecht zu dessen Längsachse verlaufender Richtung eine Höhe (H) aufweist, die größer als dessen senkrecht zur Höhe (H) und senkrecht zu dessen Längsachse verlaufende Breite (B) ist.

4. MEMS-Sensor gemäß Anspruch 1, **dadurch gekennzeichnet, dass**
- zwei parallel zueinander angeordnete, auf zwei voneinander beabstandeten Stützkörpern (5) angeordnete Kanäle (1) vorgesehen sind ,
-- die jeweils einen zwischen den beiden Stützkörpern (5) frei liegenden Kanalabschnitt (7, 7a) umfassen,
-- die beiden Kanalabschnitte (7, 7a) parallel zueinander verlaufen, und
- die Erregereinrichtung (E) derart ausgebildet ist, dass sie die beiden Kanalabschnitte (7, 7a) im Messbetrieb jeweils zu Schwingungen, insb. zu gegenphasigen Schwingungen, in der vorgegebenen Schwingungsebene (x-y) anregt.

5. MEMS-Sensor gemäß Anspruch 1, **dadurch gekennzeichnet, dass**
- der Kanal (21) ein auf zwei voneinander beabstandeten Stützkörpern (5) angeordneter u-förmiger Kanal (21) ist,
-- der zwei parallel zueinander angeordnete voneinander beabstandete Kanalsegmente (23) und ein die beiden parallelen Kanalsegmente (23) miteinander verbindendes Kanalsegment (25) umfasst, und
-- dessen Kanalabschnitte (27) jeweils durch einen zwischen den beiden Stützkörpern (5) frei liegenden Kanalabschnitt (27) eines der beiden parallelen Kanalsegmente (23) gebildet sind, und
- die Erregereinrichtung (E) derart ausgebildet ist, dass sie die beiden Kanalabschnitte (27) im Messbetrieb jeweils zu Schwingungen, insb. zu gegenphasigen Schwingungen, in der vorgegebenen Schwingungsebene (x-y) anregt.

6. MEMS-Sensor gemäß Anspruch 1, **dadurch gekennzeichnet, dass**
- der Kanal (1, 21) einen Einlass (13) aufweist, über den das Fluid im Messbetrieb einlassseitig in den Kanal (1, 21) eintritt, und
- der Kanal (1, 21) einen Auslass (15) aufweist, über den das Fluid im Messbetrieb nach dem durchströmen des Kanals (1, 21) auslassseitig aus dem Kanal (1, 21) austritt.

7. MEMS-Sensor gemäß Anspruch 1, **dadurch gekennzeichnet, dass**
- die Erregereinrichtung (E) derart ausgestaltet ist, dass sie im Messbetrieb die Nutzschwingungsmode anregt, und
- eine Messeinrichtung vorgesehen ist, die derart ausgebildet ist, dass sie im Messbetrieb mindestens eine von einer Eigenschaft, insb. einem Massendurchfluss, einer Dichte oder einer Viskosität, des im Messbetrieb durch den Kanal (1) hindurch strömenden Fluids abhängige Eigenschaft der resultierenden Schwingungsform des Kanalabschnitts (7, 7a, 27) messtechnisch erfasst und hieraus die zugehörige Messgröße bestimmt.

8. Verfahren zur Herstellung eines MEMS-Sensor gemäß einem der vorangehenden Ansprüche, **dadurch gekennzeichnet, dass**
- aus einem ersten Wafer aus dem anisotropen Werkstoff im Querschnitt u-förmige, jeweils drei der vier Kanalwände (9, 11) eines Kanals (1, 21) bildende Profile hergestellt werden, die in der Draufsicht den Verlauf der herzustellenden Kanäle (1, 21) aufweisen, und
- ein zweiter Wafer derart mit dem ersten Wafer verbunden wird, dass er die Innenräum der u-förmigen Profile nach außen abschließt, und
- der zweite Wafer bis auf dessen die vierten Kanalwände (9) bildenden Bereiche entfernt wird,
- wobei der erste und der zweite Wafer den anisotropen Werkstoff jeweils in einer räumlichen Ausrichtung enthalten, die der Ausrichtung des Werkstoffs in den Kanalabschnitten (7, 7a, 27) entspricht.

9. Verfahren gemäß Anspruch 8, **dadurch gekennzeichnet, dass**
- die Wafer aus Silizium oder aus einem Werkstoff auf Siliziumbasis, insb. aus dotiertem Silizium, bestehen,
- eine Flächenormale auf den ersten und den zweiten Wafer jeweils parallel zur (100)-Richtung der Kristallstruktur des Werkstoffs verläuft, und
- die Wafer bei der Herstellung der Kanäle (1, 21) derart ausgerichtet werden, dass die Längsachsen der Kanalabschnitte (7, 7a, 27) parallel zur (110)-Richtung der Kristallstruktur verlaufen.

## Claims

1. MEMS sensor designed to measure at least one measured variable, particularly a density, a flow and/or a viscosity, of a fluid, with
- at least a micro-fluidic channel (1, 21),
-- which has at least one channel section (7, 7a, 27) that can be excited to vibrate, and
- an exciter unit (E) designed to excite a useful vibration mode in which the channel section (7, 7a, 27) produces vibrations in a predefined vibration plane (x-y),
**characterized in that**
the channel section (7, 7a, 27) is made from an anisotropic material with an elasticity that depends on the direction, said section being spatially arranged in such a way that an elasticity module of the material that is a determining factor for a rigidity of the channel section (7, 7a, 27) in relation to deflections of the channel section (7, 7a, 27) that are perpendicular to the vibration plane (x-y) is greater than an elasticity module of the material that is a determining factor for a rigidity of the channel section (7, 7a, 27) in relation to deflections of the channel section (7, 7a, 27) extending in the vibration plane (x-y).

2. MEMS sensor as claimed in Claim 1, **characterized in that**
- the channel section (7, 7a, 27) is made from silicon or a silicon-based material, particularly doped silicon, and
- a crystalline structure of the material is oriented in such a way that
-- the [110]- direction of the crystalline structure is parallel to a longitudinal axis of the channel section (7, 7a, 27), and
-- the [001]- direction of the crystalline structure is parallel to a surface normal on the vibration plane (x-y).

3. MEMS sensor as claimed in Claim 1, **characterized in that**
in the direction perpendicular to the vibration plane (x-y) and perpendicular to its longitudinal axis, the channel section (7a, 27) has a height (H) which is greater than its width (B) which is perpendicular to the height (H) and perpendicular to its longitudinal axis.

4. MEMS sensor as claimed in Claim 1, **characterized in that**
- two channels (1) are provided which are arranged parallel to one another and mounted on two support bodies (5) that are spaced apart,
-- wherein said channels each comprise a channel section (7, 7a) freely located between the two support bodies (5)
-- the two channel sections (7, 7a) are parallel to one another, and
- the excitation unit (E) is designed in such a way to excite, in the measuring mode, the two channel sections (7, 7a) to produce vibrations, particularly anti-phase vibrations, in the predefined vibration plane (x-y).

5. MEMS sensor as claimed in Claim 1, **characterized in that**
- the channel (21) is a U-shaped channel arranged on two support bodies (5) spaced apart from one another,
-- wherein the channel comprises two channel segments (23) arranged parallel to one another and spaced apart from one another, as well as a channel segment (25) connecting the two parallel channel segments with one another (23), and
-- whose channel sections (27) are each formed by a channel section (27) of one of the two parallel channel segments (23) freely located between the two support bodies (5), and
- the excitation unit (E) is designed in such a way that, in the measuring mode, it excites the two channel sections (27) to perform vibrations, particularly anti-phase vibrations, in the predefined vibration plane (x-y).

6. MEMS sensor as claimed in Claim 1, **characterized in that**
- the channel (1, 21) has an inlet (13) by means of which, in the measuring mode, the fluid enters the channel (1, 21) on the inlet side, and
- the channel (1, 21) has an outlet (15) by means of which, in the measuring mode, the fluid exits the channel (1, 21) on the outlet side after flowing through the channel (1, 21).

7. MEMS sensor as claimed in Claim 1, **characterized in that**
- the excitation unit (E) is designed to excite the useful vibration mode in the measuring mode, and
- a measuring device is provided which is designed in such a way that, in the measuring mode, it measures at least one property of the resulting vibration form of the channel section (7, 7a, 27), said property being dependent on a property of the fluid flowing through the channel (1) - particularly a mass flow, a density or a viscosity, and determines the associated measured variable from this.

8. Procedure to manufacture a MEMS sensor as claimed in one of the previous claims, **characterized in that**
- profiles with a U-shaped cross-section and forming three of the four walls (9, 11) of a channel (1, 21), are made from a first wafer of the anisotropic material, said profiles having, in the top view, the course of the channels (1 , 21) to be made, and
- a second wafer is connected to the first wafer in such a way that it seals the interior spaces of the U-shaped profiles to the outside, and
- the second wafer is removed with the exception of its parts forming the walls (9) of the fourth channel,
- wherein the first and the second wafer each contain the anisotropic material in a spatial orientation corresponding to the orientation of the material in the channel sections (7, 7a, 27).

9. Procedure as claimed in Claim 8, **characterized in that**
- the wafers are made from silicon or a silicon-based material, particularly doped silicon,
- a surface normal on the first and second wafer is parallel, in each case, to the direction (100) of the crystalline structure of the material, and
- the wafers are aligned, during the manufacture of the channels (1 , 21), in such a way that the longitudinal axes of the channel sections (7, 7a, 27) are parallel to the (110)- direction of the crystalline structure.

## Revendications

1. Capteur MEMS destiné à la mesure d'au moins une grandeur de mesure, notamment une densité, un débit et/ou une viscosité, d'un fluide, avec
- au moins un canal micro-fluidique (1, 21),
-- qui présente au moins une section de canal (7, 7a, 27) pouvant être excitée en vibrations, et
- un dispositif excitateur (E) destiné à l'excitation d'un mode de vibration utile, pour lequel la section de canal (7, 7a, 27) exécute des vibrations dans un plan de vibration (x-y) prédéfini,
**caractérisé en ce que**
la section de canal (7, 7a, 27) est constituée d'un matériau anisotrope avec une élasticité dépendant de la direction, laquelle section est orientée spatialement de telle sorte qu'un module d'élasticité du matériau qui est déterminant pour une rigidité de la section de canal (7, 7a, 27) par rapport aux déformations de la section de canal (7, 7a, 27) perpendiculaire au plan de vibration (x-y) est supérieur à un module d'élasticité du matériau qui est déterminant pour une rigidité de la section de canal (7, 7a, 27) par rapport aux déformations de la section de canal (7, 7a, 27) s'étendant dans le plan de vibration (x-y).

2. Capteur MEMS selon la revendication 1, **caractérisé en ce que**
- la section du canal (7, 7a, 27) est constituée de silicium ou d'un matériau à base de silicium, notamment de silicium dopé, et
- une structure cristalline du matériau est orientée de telle sorte que
-- la direction [110] de la structure cristalline est parallèle à un axe longitudinal de la section du canal (7, 7a, 27), et
-- la direction [001] de la structure cristalline est parallèle à une surface normale au plan de vibration (x-y).

3. Capteur MEMS selon la revendication 1, **caractérisé en ce que**
la section de canal (7a, 27) présente, dans la direction perpendiculaire au plan de vibration (x-y) et perpendiculaire à son axe longitudinal, une hauteur (H) qui est supérieure à sa largeur (B) perpendiculaire à la hauteur (H) et perpendiculaire à son axe longitudinal.

4. Capteur MEMS selon la revendication 1, **caractérisé en ce que**
- deux canaux (1) disposés parallèlement l'un à l'autre et montés sur deux corps de support (5) espacés sont prévus,
-- lesquels canaux comprennent chacun une section de canal (7, 7a) se trouvant libre entre les deux corps de support (5)
-- les deux sections de canal (7, 7a) étant parallèles l'une à l'autre, et
- le dispositif d'excitation (E) est conçu de telle sorte qu'il excite, en mode de mesure, respectivement les deux sections de canal (7, 7a) en vibrations, notamment en vibrations en opposition de phase, dans le plan de vibration (x-y) prédéfini.

5. Capteur MEMS selon la revendication 1, **caractérisé en ce que**
- le canal (21) est un canal en forme de U disposé sur deux corps de support (5) espacés l'un de l'autre,
-- lequel canal comprend deux segments de canal (23) disposés parallèlement l'un à l'autre et espacés l'un de l'autre, ainsi qu'un segment de canal (25) reliant entre eux les deux segments de canal parallèles (23), et
-- dont les sections de canal (27) sont formées chacune par une section de canal (27) de l'un des deux segments de canal (23) parallèles se trouvant libre entre les deux corps de support (5), et
- le dispositif d'excitation (E) est conçu de telle sorte qu'il excite, en mode de mesure, respectivement les deux sections de canal (27) en vibrations, notamment en vibrations en opposition de phase, dans le plan de vibration (x-y) prédéfini.

6. Capteur MEMS selon la revendication 1, **caractérisé en ce que**
- le canal (1, 21) comporte une entrée (13) par laquelle, en mode de mesure, le fluide pénètre dans le canal (1, 21) du côté entrée, et
- le canal (1, 21) possède une sortie (15) par laquelle, en mode de mesure, le fluide sort du canal (1, 21) du côté sortie après s'être écoulé dans le canal (1, 21).

7. Capteur MEMS selon la revendication 1, **caractérisé en ce que**
- le dispositif d'excitation (E) est conçu de manière à exciter le mode de vibration utile dans le mode de mesure, et
- il est prévu un dispositif de mesure qui est conçu de telle sorte que, en mode de mesure, il puisse mesurer au moins une propriété du mode de vibration résultant
- notamment un débit massique, une densité ou une viscosité du fluide s'écoulant dans le canal (1) en mode de mesure - qui dépend d'une propriété du mode de vibration de la section de canal (7, 7a, 27) qui en résulte et en détermine la grandeur de mesure associée.

8. Procédé destiné à la fabrication d'un capteur MEMS selon l'une des revendications précédentes, **caractérisé en ce que**
- les profilés de section transversale en forme de U, formant chacun trois des quatre parois (9, 11) d'un canal (1, 21), sont fabriqués à partir d'une première plaquette de matériau anisotrope, lesquels profilés présentent, en vue de dessus, le tracé des canaux (1 , 21) à fabriquer, et
- une deuxième plaquette est assemblée à la première plaquette de manière à fermer l'espace intérieur des profilés en U vers l'extérieur, et
- la deuxième plaquette est retirée, à l'exception de ses parties formant les parois (9) du quatrième canal,
- la première et la deuxième plaquette contenant chacune le matériau anisotrope dans une orientation spatiale correspondant à l'orientation du matériau dans les sections de canal (7, 7a, 27).

9. Procédé selon la revendication 8, **caractérisé en ce que**
- les plaquettes sont constituées de silicium ou d'un matériau à base de silicium, notamment du silicium dopé,
- une surface normale à la première et à la deuxième plaquette est respectivement parallèle à la direction (100) de la structure cristalline du matériau, et
- les plaquettes sont alignées, lors de la fabrication des canaux (1 , 21), de telle manière que les axes longitudinaux des sections de canal (7, 7a, 27) soient parallèles à la direction (110) de la structure cristalline.
